# EUROPEAN PATENT APPLICATION

(11) **EP 1 355 227 A1**
(43) Date of publication of application: **22.10.2003**
(21) Application number: 02252642.0
(22) Date of filing: 15.04.2002
(51) Int. Cl.: G06F 3/023

(54) **Apparatus and method for data input in a mobile device**

(71) Applicant: Telefonaktiebolaget L M Ericsson (Publ), 126 25 Stockholm (SE)
(72) Inventor: Tng, Tai-Hou, Signature Park, SG-596741 (SG)
(74) Representative: Vigars, Christopher Ian

(57) **Abstract**

A data input system suitable for composing text messages on a mobile telephone. A standard keypad (12) and display screen (22) are utilized whereby each of several keys (10) represents a predetermined subject category, such as locations, times of day or greetings. When a user depresses one of these keys, a range of word, character or phrase options are displayed in a certain area (24) of the display screen (22). A scroll function is used to highlight the user's preferred option, which is then selected (by depressing a further key), and appears in a message text area (26) in the display screen. Repetition of this process enables the user to generate a desired message.

## Description

### Technical Field of the Invention

The present invention relates to a data input apparatus and method, and in particular to use of a mobile telephone keypad for composition of short messages.

### Description of the Related Art

A widely used function of mobile telephones is to send and receive short messages. Various methods are known for the inputting of a message text, including direct mapping and interim mapping techniques.

Examples of direct mapping techniques are speech and handwriting recognition. Such techniques require digitiser equipment and substantial processing power which can increase apparatus dimensions and cost considerably.

An example of an interim mapping technique is keypad entry whereby a user depresses at least one initial key. The processor in the mobile telephone predicts the most probable conclusions to the word, ideogram or phrase, and displays at least one of these for the user to consider. The user then indicates via the keypad whether one of the words, ideograms or phrases displayed is to form part of the intended message. The detail of interim mapping techniques varies dependent upon the language utilised in the message. For example, in ideogram- or character-based languages (such as Chinese), a key can represent a particular 'stroke class'. As a result of the user activating a certain key or sequence of keys, the processor determines several possible characters featuring the combination of 'strokes' input by the user. Alternatively, in languages comprising words formed from letters (such as European languages), a key can represent a particular letter or letters. As a result of the user activating certain keys, the processor determines at least one probable word which contains the initial letter(s). The user can accept or reject the word(s) offered, or depress a further key representing the next letter of the intended word.

Patent No. US 6,137,867 (Perera et al.) describes a system for composing alphanumeric messages using a telephone keypad, in which a user is presented with a most likely intended word, phrase and message in response to initial letters, then words and then phrases, respectively, input by the user. Ultimately, the user confirms if the message generated by the processor is the message intended by the user. The embodiment described pertains to composing messages in the English language.

Therefore, it can be seen that known interim mapping techniques utilise the sub-structure of words and characters to build the users' desired message. However, such systems are not intuitive for the user and the user must remember or search for the position of the key they need to depress.

### Summary

The present invention aims to provide a means for generating a short message using a standard keypad, such as provided on existing communication devices (such as portable telecommunication devices), using an efficient means of data input which mitigates the difficulties associated with the prior art.

According to a first aspect of the present invention, there is provided an electronic device comprising:
data input means for selecting a category of data items and for selecting a data item from that category; and
message composition means for composing a message which includes data items selected using the data input means.

According to a second aspect of the present invention there is provided a method for message composition comprising the steps of:
selecting a category of data items and selecting a data item from that category; and
composing a message which includes the selected data items.

Advantageously, the present invention enables the user to compose a message quickly and efficiently, and mitigates the problems associated with the prior art.

The present invention is particularly suitable for use in ideogram- or character-based languages such as Chinese, because a user is presented with a choice of fully-formed characters and does not need to 'build' a required character from various strokes or otherwise.

### Brief Description of the Drawings

Figure 1 is a schematic diagram of a mobile telephone keypad and display screen in accordance with a first embodiment of the invention.
Figure 2 is a schematic diagram of a joystick and display screen in accordance with a second embodiment of the invention.
Figure 3 is a schematic diagram of a mobile telephone keypad and display screen in accordance with a third embodiment of the invention.
Figure 4 is a flow chart showing the operational stages of the present invention.

### Detailed Description of the Embodiments

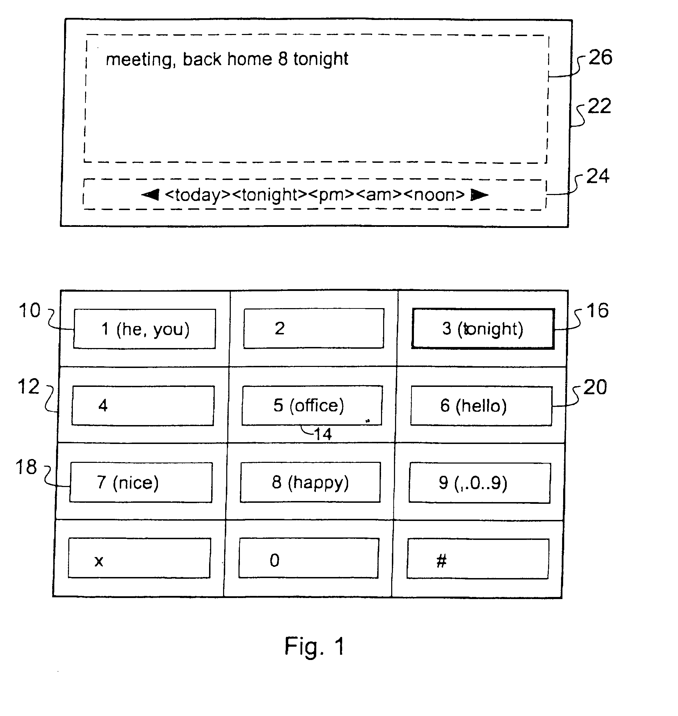

In Figure 1, each key 10 on a standard keypad 12 represents a particular predetermined subject category, such as locations (numeral 5 key, 14), times of day (numeral 3 key, 16), common adjectives (numeral 7 key, 18) or greetings (numeral 6 key, 20). A display screen 22 is also provided.

In operation, depressing a key 10 results in multiple word or character options within the relevant category being presented to the user in an options display area 24 within the display screens 22. One of the options is automatically highlighted, and if it is not the option required by the user then a scroll function is utilised to systematically change the option highlighted to the one required. Depressing a further predetermined key (not illustrated) causes the highlighted option to also appear in a message text area 26. If necessary, this process is repeated, with the user depressing a further subject category key 10 and again selecting the required word or character option. A completed message is then sent to an intended recipient or stored for subsequent editing as in conventional text messaging devices.

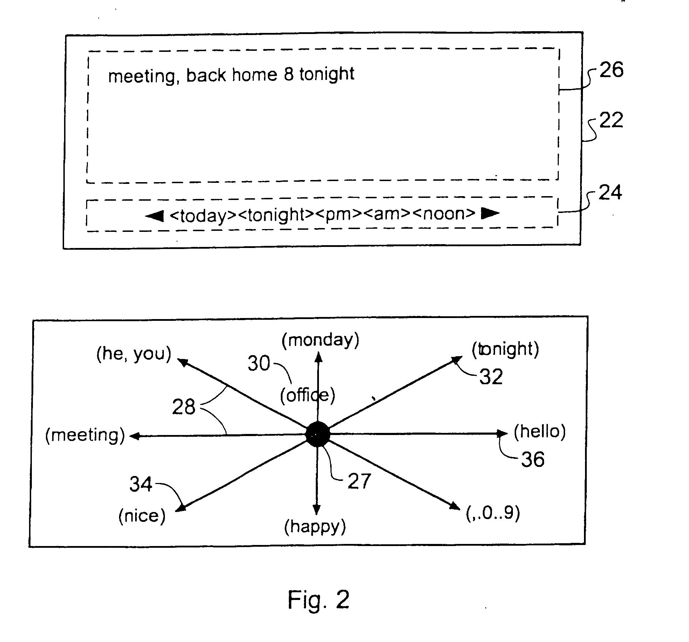

In Figure 2, a joystick 27 provides the same functionality as the standard keypad 12 of the embodiment of Figure 1. For ease of comprehension, where different embodiments include similar features, the same reference numerals are used. Each predetermined direction 28 of the joystick 27 represents a particular predetermined subject category, such as locations (central joystick position, 30), times of day (top right joystick position, 32), common adjectives (lower left joystick position, 34) or greetings (right joystick position, 36).

As in the embodiment of Figure 1, a display screen 22 is also provided.

In operation, moving the joystick 27 to one of the predetermined positions has the same result as depressing a key 10 in the embodiment of Figure 1. A scroll function and word choosing means can be implemented in several ways, for example, by use of a button or a track ball in proximity to the joystick 27. In such a case, the user moves the joystick to highlight a desired category and depresses and holds the button to choose that category. Next, the user moves the joystick 27 (or tracker ball) to scroll through the multiple word or character options displayed in the options display area 24 within the display screen 22. Releasing the depressed button causes the highlighted option to appear in the message text area 26. It is envisaged that alternative methods can be utilised. For example, the button can be depressed and released a first time to choose the highlighted category and the button can be depressed and released a second time to choose the highlighted word or character option.

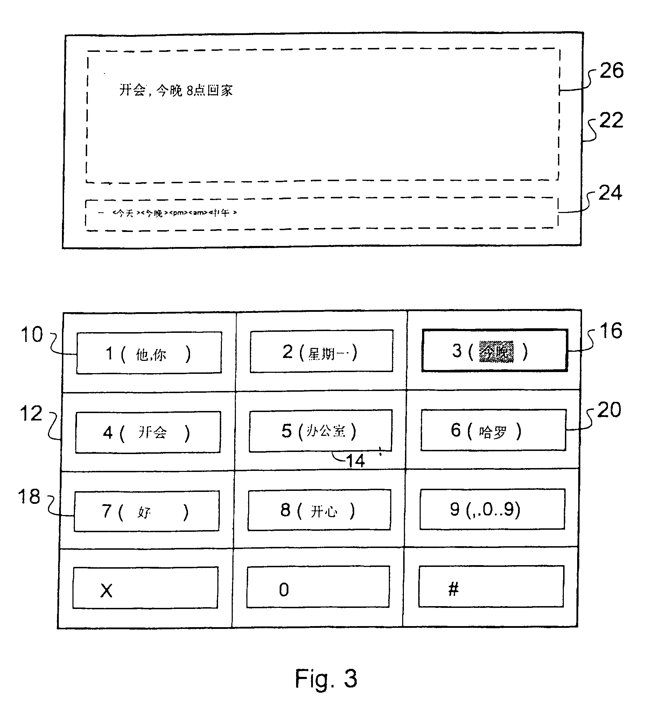

The embodiment of Figure 3 shows a mobile telephone pad and display screen similar to that of Figure 1, but utilising Chinese characters instead of English word options. Common reference numerals to Figure 1 are used to indicate parts common to both embodiments. Operation of such a device is similar to the operation described for the embodiment of Figure 1.

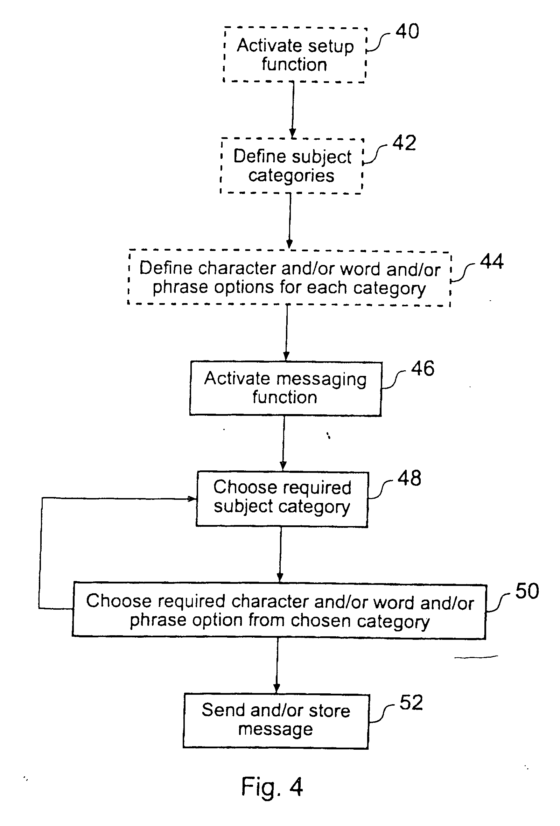

As shown in Figure 4, the first stage of operation of the present invention is an optional stage (indicated by dashed lines) in which a 'set-up' function is activated 40. Whilst the device is in this mode, the user can define the subject categories 42 and also the character and/or word and/or phrase options for each category 44. In order to compose a message, a messaging function is activated 46. The user chooses the required subject category 48 and then the character and/or word and/or phrase option from the chosen category 50. The message compilation stages 48 50 can be repeated as required to compose the message required by the user. Finally, the user can decide whether to send or to store the message 52.

Clearly, the user can decide when the set-up function 40 42 44 is activated and the user can decide not to employ this function but instead to use the pre-programmed categories and options (or a combination of user defined and pre-programmed categories and options).

Further embodiments of the present invention utilise arrow keys, a track ball or a mouse for the same function as the keypad 12 of the embodiment of Figure 1. Specifically, each direction indicated by a user represents one of the predetermined subject categories.

It is envisaged that a scroll function can be utilised in any embodiments of the present invention in order to bring additional hidden word or character options into view.

A further embodiment of the present invention can include a microphone as the data input means instead of, or in addition to, the keypad 12 (or its alternatives). Thus, voice activation of the data input apparatus is possible.

In addition to displaying words or characters in the options display area 22, common phrases comprising two or more words or characters can be included. Further, whilst the device can initially display categories and options of language in common usage, it is also envisaged that a degree of personalisation could subsequently be implemented by the user. Specifically, the word, character or phrase options within a category or even the categories themselves could be initially input by the user to represent the elements of messages frequently composed by, and specific to, the user. The order of the options within a category can be based on the frequency with which they are chosen by the user. Also, it is envisaged that where a user specifies a recipient of a message (for example, from the users phone book function) prior to composing the message, the categories and options within them presented to the user could be specific to that recipient (based on the content of previous messages sent to that recipient).

Thus, it will be apparent to the skilled person that the above described apparatus and method are not exhaustive and variations on this system may be utilised to achieve a similar result whilst employing the same inventive concept. For example, any language which can be presented figuratively can potentially utilise this inventive concept. Clearly, the apparatus used to implement the present invention is not limited to a mobile telephone and could encompass any electronic device comprising a data input means and display means, eg. a personal computer, a personal digital assistant, etc. Thus, the inventive concept of the present invention is not limited to electronic devices which include a transmitter.

It can therefore be seen that the present invention provides a data input device which has significant advantages over the conventional devices.

## Claims

1. An electronic device comprising:
data input means for selecting a category of data items and for selecting a data item from that category; and
message composition means for composing a message which includes data items selected using the data input means.

2. The electronic device as claimed in claim 1, further comprising:
storage means for storing a plurality of categories of data items.

3. The electronic device as claimed in any preceding claim, further comprising:
display means; and
selection means for selecting a category of message data items from the said plurality thereof.

4. The electronic device as claimed in any preceding claim, wherein the data input means is at least one of a keypad, a joystick, a mouse, a trackball and a microphone.

5. The electronic device as claimed in any preceding claim, wherein the categories of data items and the data items therein can be predetermined by the user.

6. The electronic device as claimed in any preceding claim, wherein the categories of data items and the data items are at least one of words, characters and phrases.

7. An electronic device as claimed in any of the preceding claims wherein the composed message is utilised as a Short Message Service (SMS) message.

8. An electronic device as claimed in any one of claims 1 to 6, wherein the composed message is utilised as an email message.

9. An electronic device as claimed in any one of the preceding claims, the device being a mobile telecommunciations device, and including:
transmission means for transmitting messages composed by the message composition means.

10. A method for message composition comprising the steps of:
selecting a category of data items and selecting a data item from that category; and
composing a message which includes the selected data items.

11. The method as claimed in claim 10, further comprising the step of:
transmitting the message composed.

12. The method as claimed in claims 10 or 11, further comprising the step of:
predetermining the categories of data items and the data items therein.
